Europäisches Patentamt

European Patent Office

Office européen des brevets

(19)

(11) Publication number: **0 086 027**
**A2**

# (12) EUROPEAN PATENT APPLICATION

(21) Application number: **83300020.1**

(22) Date of filing: **05.01.83**

(51) Int. Cl.³: **B 60 S 11/00**

(30) Priority: **09.02.82 JP 19193/82**

(43) Date of publication of application:
**17.08.83 Bulletin 83 33**

(84) Designated Contracting States:
**DE FR GB**

(71) Applicant: **NISSAN MOTOR COMPANY, LIMITED**
**No.2, Takara-cho, Kanagawa-ku**
**Yokohama City(JP)**

(72) Inventor: **Abe, Masafumi**
**1176 A-104, Tsurumaki**
**Hadano City(JP)**

(72) Inventor: **Yokomizo, Hideo**
**No. 3-1-8-306 Tsujido Nishikaigan**
**Fujisawa City Kanagawa Prefecture(JP)**

(74) Representative: **Freed, Arthur Woolf et al,**
**MARKS & CLERK 57-60 Lincoln's Inn Fields**
**London WC2A 3LS(GB)**

(54) A wheeled vehicle having a multi-purpose bracket.

(57) A tow bar (18) is welded to a jack up bracket (12) secured to a wheeled vehicle body (10) and is engageable with a traction hook to effect a traction of the vehicle. The jack up bracket is formed with an engaging hole (12c) so that, upon requirement of the tie down of the vehicle, a tie down hook (24) is engaged with the engaging hole to complete the tie down.

FIG.2

EP 0 086 027 A2

" A WHEELED VEHICLE HAVING A MULTI-PURPOSE BRACKET"

The present invention relates in general to a construction of wheeled vehicle, and more particularly to a wheeled vehicle body having a jack up bracket to which a suitable jack device is applied to effect lifting of the vehicle.

According to the present invention, there is proposed an arrangement of a multi-purpose bracket secured to a wheeled vehicle body, which bracket can act as a jack up bracket, a tow bar supporting bracket and a tie down bracket.

According to the present invention, there is provided, in a wheeled vehicle having a floor panel, an arrangement which comprises an elongate bracket having a recessed construction, the bracket being secured at its outer peripheral flange portion to the floor panel from the outside of the vehicle in such a manner that an enclosed space is defined in the recess of the bracket in cooperation with the floor panel, the bracket being formed with an enlarged lower portion to which a jack device is applicable to effect a lift of the vehicle; a generally U-shaped tow bar straddling the bracket and secured at its leg portions to the respective side wall portions of the bracket with its bridged portion projecting away from the vehicle body, the tow bar being engageable with a traction hook to

2.

effect a traction of the vehicle; and an engaging hole consisting of aligned openings respectively formed in the side wall portions of the enlarged lower portion of the bracket, whereby, upon requirement of the tie down of the vehicle, a tie down hook is engaged with the engaging hole to complete the tie down.

In the accompanying drawings:-

Figure 1 is a partial side view of a motor vehicle provided with a multi-purpose bracket of the present invention, showing a condition wherein the vehicle is tied down to a car carrier trailer by using the bracket;

Figure 2 is an enlarged side view of the multi-purpose bracket of the present invention; and

Figure 3 is a sectional view taken along the line III-III of Figure 2.

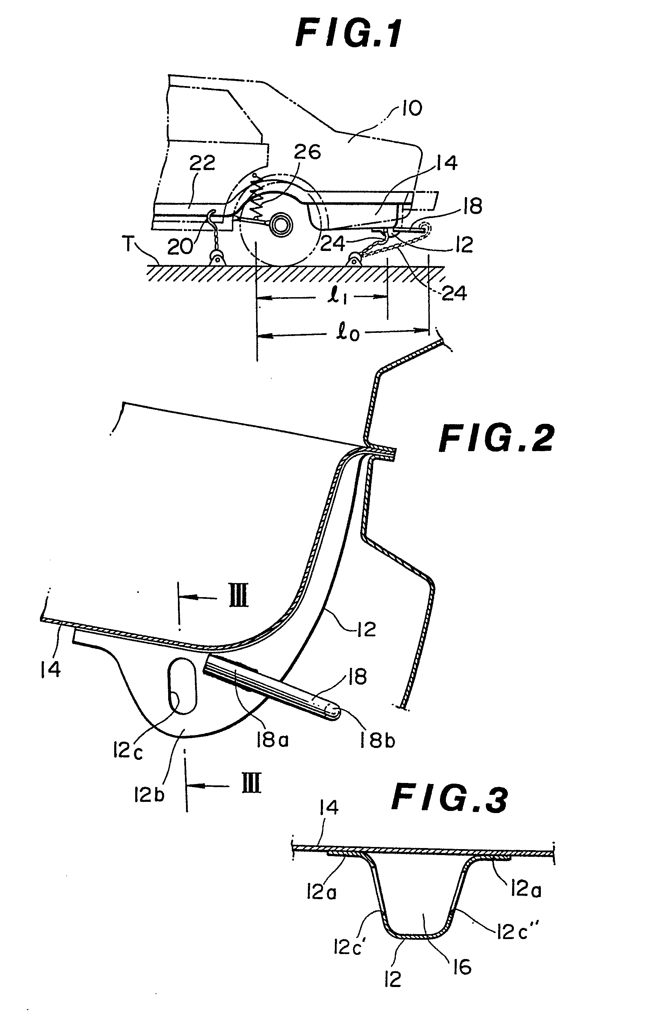

Referring to Figure 1 of the drawings, there is shown a passenger motor vehicle 10 provided with a multi-purpose bracket 12 according to the present invention. The bracket 12 is welded to a rear side end of the vehicle floor, that is, the rear portion of a spare wheel container panel 14. As seen from Figures 2 and 3, the bracket 12 has a chinese spoon like configuration and has throughout the periphery thereof a flange portion 12a which is welded to the

3.

panel 14. Thus, the bracket 12 secured to the container panel 14 defines therein an enclosed curved elongate space 16 in cooperation with the panel 14. In the embodiment, the bracket 12 extends upwardly with its enlarged or most expanded portion 12b extending downwardly. A generally U-shaped tow bar 18 straddles the bracket 12 and is welded at its leg portion 18a to the side walls of the enlarged portion 12b of the bracket 12 with its bridge portion 18b projecting rearward with respect to the vehicle 10, as seen from Figure 1.

In accordance with the present invention, the following measure is further proposed for providing the bracket 12 with an additional function. That is, an engaging hole 12c is formed in the bracket 12, which consists of elongate openings 12c' and 12c" (see Figure 3) formed in the respective side walls of the enlarged portion 12b of' the bracket 12. As is seen from Figure 2, each opening 12c' and 12c" extends vertically and has smoothly curved semi-circular upper and lower ends. If desired, the engaging hole 12c may have an oval form with the line of the apsides thereof extending vertically.

With the bracket 12 having the above-described construction and arrangement, the following functions are provided.

4.

Firstly, the bracket 12 is used as a jack up bracket. In fact, by applying a suitable jack device to the bracket 12, the rear portion of the vehicle 10 is safely lifted up. Since the bracket 12 is of box-shaped construction, the mechanical strength of it against the load applied thereto is great.

Secondly, the bracket 12 is used as a rigid supporter of the tow bar 18. The traction of the vehicle 10 is achieved by engaging a traction hook (not shown) with the tow bar 18. Since the supporter, which is the bracket 12, is securely fixed to the vehicle body 10, the traction of the vehicle is safely carried out.

Thirdly, by the presence of the engaging hole 12c, the tie down of the vehicle 10 is achieved safely and reliably. In fact, as can be seen from Figure 1, when the tie down of the vehicle 10 is intended on a car carrier trailer T, a tie down hook 20 is engaged with a hole (not shown) formed in a side member 22 of the vehicle 10, and another tie down hook 24 is engaged with the engaging hole 12c formed in the multi-purpose bracket 12 of the present invention. This tie down arrangement is quite advantageous when considering that hitherto, the tie down has been made by engaging the tie down hook 24 with, for example, the tow bar 18 in a manner as indicated by the broken line 25.

In fact, the moment produced about the rear suspension 26 when the tie down hook 24 engages with the engaging hole 12c of the bracket 12 is very smaller than that produced when the tie down hook 24 engages with the tow bar 18, as will be understood when comparing the distance $\ell_1$ between the rear suspension 26 and the engaging hole 12c with the greater distance $\ell_0$ between the rear suspension 26 and the tow bar 18. Thus, in the conventional tie down arrangement, there is a high possibility of deforming the spare wheel container panel 14 during transportation of the vehicle 10. Further, in the conventional arrangement, it may happen that the tow bar 18 is removed (or at least deformed) from the supporting bracket 12 because the tow bar 18 is subjected to a great stress under such tie down condition. However, in the present invention, the provision of the engaging hole 12c solves such drawbacks as are encountered in the conventional arrangement.

0086027

6.

<u>CLAIMS</u>:

1.     In a wheeled vehicle (10) having a floor panel, an arrangement comprising:

an elongate bracket (12) having a recessed construction, said bracket being secured at its outer peripheral flange portion (12a) to said floor panel from the outside of the vehicle in such a manner that an enclosed space (16) is defined in the recess of said bracket in cooperation with said floor panel, said bracket being formed with an enlarged lower portion (12b) to which a jack device is applicable to effect a lift of the vehicle;

a generally U-shaped tow bar (18) straddling said bracket and secured at its leg portions (18a) to the respective side wall portions of said bracket with its bridged portion projecting away from the vehicle body, said tow bar being engageable with a traction hook to effect a traction of the vehicle; and

an engaging hole (12c) consisting of aligned openings (12c',12c") respectively formed in the side wall portions of said enlarged portion of the bracket, whereby, upon requirement of the tie down of the vehicle, a tie down hook (24) is engaged with said engaging hole to complete the tie down.

2.     An arrangement as claimed in Claim 1, in which said engaging hole (12c) is an elongate hole extending

7.

generally perpendicular with respect to the floor panel (14).

3.    An arrangement as claimed in Claim 2, in which each opening of said engaging hole (12c) has smoothly curved semi-circular upper and lower ends.

4.    An arrangement as claimed in Claim 1, in which said elongate bracket (12) is welded at its flange portion (12a) to a spare wheel retainer panel (14).

$1/1$

## FIG.1

## FIG.2

## FIG.3